# EUROPEAN PATENT SPECIFICATION

(11) **EP 3 103 778 B1**
(45) Date of publication and mention of the grant of the patent: **18.04.2018**
(21) Application number: 16173885.1
(22) Date of filing: 10.06.2016
(51) Int. Cl.: C04B 28/02, C04B 7/52, B27N 3/00, E04C 2/10, E04C 2/26, C04B 18/26, C04B 111/80

(54) **WOOD-CEMENT COMPOSITE PANEL**
HOLZZEMENTVERBUNDPANEEL
PANNEAU COMPOSITE DE BOIS

(30) Priority: 12.06.2015 SK 500312015
(43) Date of publication of application: 14.12.2016
(73) Proprietor: CRH (Slovensko) a.s., 90638 Rohoznik (SK)
(72) Inventor: SIPPLE, Ernst-Michael, Vienna (AT); REZNÁKOVÁ, Mária, 90638 Rohozník (SK)
(74) Representative: Majlingova, Marta

(56) References cited:
- EP-A2- 2 514 730
- DE-A1-102011 018 301
- US-A- 4 407 677
- US-A1- 2010 064 623
- BHATTY M S Y: "USE OF CEMENT-KILN DUST IN BLENDED CEMENTS", WORLD CEMENT, PALLADIAN PUBLICATIONS, ELSTEAD, GB, vol. 15, no. 4, 1 May 1984 (1984-05-01), pages 126-134, XP008091933, ISSN: 0263-6050
- MARIA S. KONSTA-GDOUTOS ET AL: "Hydration and properties of novel blended cements based on cement kiln dust and blast furnace slag", CEMENT AND CONCRETE RESEARCH, vol. 33, no. 8, 1 August 2003 (2003-08-01) , pages 1269-1276, XP55144552, ISSN: 0008-8846, DOI: 10.1016/S0008-8846(03)00061-9

## Description

### Technical field

The invention concerns a wood-cement composite panel.

### State of the art

Cement, wood wool or wood fibers and water are mixed for manufacture of wood-cement building boards. Eventually, plastifiers or mineralisation additives, such as fly ash, are admixed additionally in order to alter mixability or fluidity of a fresh mixture or in order to enhance mechanical properties of a hardened board. The fresh mixture is dispersed into a slab mould. The filled mould is then compacted in several working steps by means of mechanical pressure and then it is hardened. The hardening procedure comprises in particular heating to approximately 80 °C during several hours. The boards are often subsequently also dried and thereafter cut and by that they are ready for sale. Wood-cement building blocks made from mixtures of Portland cement, fly ash, cement kiln dust and wood chips are known from US2010/064623 A1. It has been observed that finished wood-cement building boards exhibit irregularities in surface colouring. There are visible darker lightly reddish coloured spots on the surface of the finished boards. In particular, said is clearly visible on the boards that have been produced with use of white cement. The colour differences also occur on the boards that have been produced with use of grey cement. Colour differences on the latter are less significantly noticeable due to the grey shade of the binder.
The objective of the present invention is to enhance production of wood-cement building boards and of cement so as to make reddish-brown colouring of the boards made with white cement and colour irregularities on the boards made with grey cement invisible.
We have found out that the brown colouring of the resulting product is caused by a chemical reaction of the wood component in an alkaline environment, thus by wood colour change. Said colouring is visible if not sufficiently covered with the cement slurry. We have further found out that brown colouring of wood is caused by the chemical reaction with hydroxide ions that are inter alia present in the alkaline environment of the cement suspension. Said brown-red colouring is caused by molecules formed by breakdown of lignin in the alkaline environment, which may occur if the wood is wetted with the cement suspension. Brown coloured components of wood pass to the solution in the alkaline cement suspension and subsequently they remain on the cement surface and thus they are visible.
Initially uncomprehended phenomenon of colour irregularities of boards produced by mixing of wood wool and cement suspension was firstly attributed to the well-known mechanism of action of hydroxide ions to lignin and insufficient coverage by cement suspension of wood parts coloured by said chemical reaction.
Possibilities of reduction or elimination of colour irregularities can be derived from the piece of knowledge as follows:
- Dying of finished boards increase production costs and it shall be therefore avoided, if possible.
- Chemical treatment of wood splinters prior to mixing with cement suspension in order to protect them from alkali action also increases production costs and is technically more demanding. For example wood can be bleached with ozone, peroxides or the like or it can be coated with an alkali-resistant substance, impregnated.
- Suppression of transfer of lignin degradation products into the solution by means of suitable chemicals is also possible. Said is a priori expensive and it would be necessary to find a suitable product acting reliably and being not too expensive.
- Said leaching of wood may be at least reduced by decreasing a share of liquid phase in the mixture, by for example addition of plastifiers. Said comprehensible option is also technically easy to perform, therefore at present said plastifiers are already used in production of such boards.
- Better coating of wood splinters by the cement slurry is also a promising option, in this case there is a risk of colouring the wood splinters, yet that is superimposed by the cement slurry. Since the present fineness of cement is not sufficient (otherwise colouring would not be visible in production), it means that cement slurries must consist of finer material now.

Increasing of cement fineness is an expensive operation, firstly due to energy consumption and secondly there is a need of another temporary storage facility - silo in the production plant.

According to the standards for cement up to 5 wt % of additives can be mixed into the ground clinker without the obligation to specifically declare them. Accordingly, the share of any fine additive in cements may not exceed 5 wt %.

### Subject matter of the invention

The subject matter of this invention is - a wood-cement composite panel which contains the cement binder which comprises 60 to 95 wt % of cement and 5 to 40 wt % of kiln dust from white cement production with the specific surface area higher than 7500 cm²/g.
This panel can be manufactured by mixing wood wool or wood fibers and water cement suspension, by moulding or compacting, by hardening at room temperature or at the increased temperature or eventually by drying and cutting to a suitable size.

The cement is white cement or grey cement, either a Portland or a port composite cement.

The contents of the kiln dust is preferably 10 to 40 wt % , more preferably 15 to 35 wt %.

### Brief description of pictures on the drawings

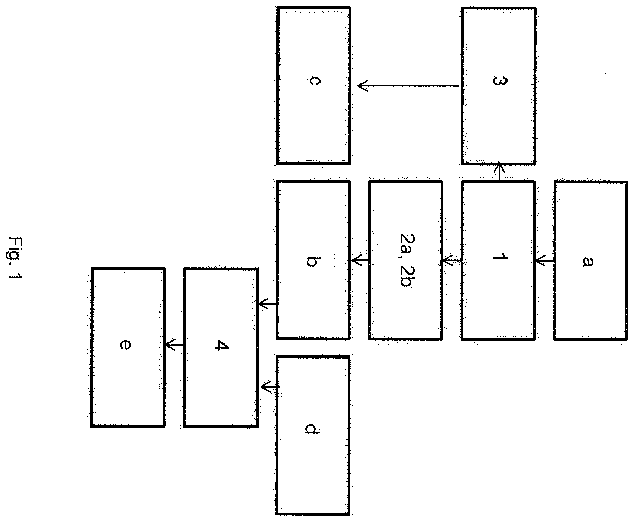

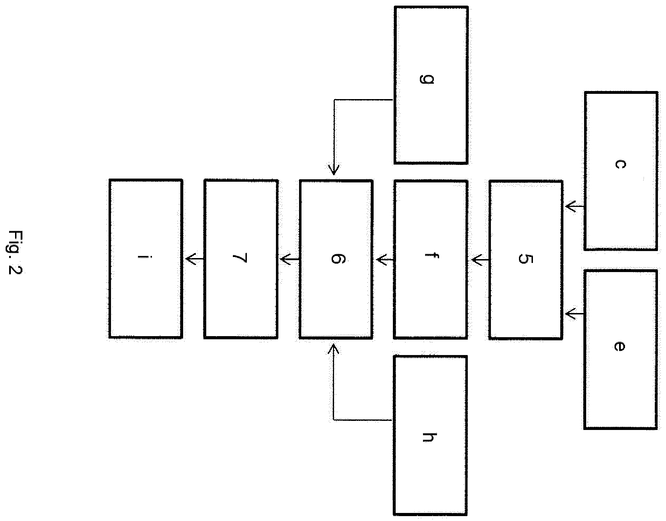

The attached picture Fig. 1 illustrates a flow diagram of a cement production method and Fig. 2 illustrates a flow diagram of a production method of building boards according to the present invention.

### Exemplary embodiments of the technical solution

### Example 1

According to Fig. 1 raw meal (a) for production of cement clinker is heated in a multi-stage cyclone tower preheater (1), then in a rotary kiln (2a), where it is sintered to a clinker (b). Said clinker is then cooled in a cooler (2b). In order to simplify the description the substances supplied to the tower preheater (1) will be referred to as "raw meal", although not all of them are completely converted to the clinker (b). Individual cyclones of the tower preheater (1) not only act as a heat exchanger, but they also separate coarse parts of the raw meal from fine particles. The coarse fraction of the raw meal is almost entirely crushed and proceeds to further lower cyclone stage of the tower preheater (1). The fine fraction of the raw meal is only partially crushed. The remaining fine fraction in the gas flow passes through another cyclone stage and eventually to the dust filter (3) installed in the tower preheater (1). The fine fraction captured in the dust filter (3) is referred to as kiln dust (c). The clinker (b) is finely ground together with various additives (d) in a cement mill (4). The resulting product is called cement (e).

According to Fig. 2 kiln dust (c) and cement (e) are dry mixed in a mixer (5) in a defined mixing ratio producing a binder (f) having controlled properties. Said binder (f) is mixed with water (g) and various additives (h) including wood wool in a mixer (6) and is used as a source material for manufacture of wood-cement composite panels (i) in a special manufacturing process (7).

### Example 2

White cement that has been dry mixed in a mixer with various below stated amounts of kiln dust acquired from dust filters of a preheater from manufacture of white cement, has been used for production of a binder.

Physical and chemical properties of white kiln dust are indicated in the following Table 1:

| | Unit | Average | STD | Count |
|---|---|---|---|---|
| Physical properties | | | | |
| Specific surface | cm²/g | 8261 | | 1 |
| Residue at 45µm sieve | % | 1.1 | | 1 |
| Whiteness Ry | - | 81.1 | | 1 |
| a* | - | 1.25 | | 1 |
| b* | - | 5.48 | | 1 |

| Mineralogical composition | | | | |
|---|---|---|---|---|
| Calcite | % | 40.7 | | 1 |
| Quartz | % | 32.8 | | 1 |
| Free lime | % | 0 | | 1 |

| Chemical properties | | | | |
|---|---|---|---|---|
| Loss on iqnition | % | 33.8 | | 1 |
| -SO3 | % | 2.35 | 0.54 | 7 |
| -Cl | % | 0.63 | 0.16 | 7 |
| NA₂O | % | 0.80 | 0.26 | 7 |
| K₂O | % | 1.16 | 0.41 | 7 |
| NA₂O eq | % | 1.56 | 0.48 | 7 |

We have prepared two mixtures of white cement A and B with 0%, 20%, 30% and 40% of white kiln dust possessing properties indicated in Table 1.

Physical and chemical properties of white cement mixtures with white kiln dust are indicated in the following Table 2.

**Table 2**

| Cement | Type | A | A | A | B | B | B | kiln dust |
|---|---|---|---|---|---|---|---|---|
| Kiln dust | % | 0% | 20% | 30% | 0% | 20% | 30% | 100% |
| Physical properties | | | | | | | | |
| Water demand | % | 30.3 | 29.8 | 31.4 | 29.15 | 30 | 29.6 | |
| Initial settinq | Min. | 129 | 115 | 135 | 212 | 195 | 185 | |
| Final settinq | Min. | 148 | 150 | 155 | 269 | 250 | 240 | |
| Specific surface | cm2/g | 4686 | 5472 | 5644 | 4329 | 5476 | 5521 | 8261 |
| R2d | MPa | 33.2 | 31.5 | 28.5 | 32.7 | 30.7 | 28.2 | |
| R28d | MPa | 58.9 | 51.6 | 44.7 | 60.6 | 52.6 | 49.6 | |
| Ry | | 84.5 | 83.2 | 83.5 | 83.7 | 82.9 | 83.0 | |
| a* | | -1.28 | -0.86 | -0.74 | -1.32 | -0.83 | -0.73 | -1.25 |
| b* | | 2.79 | 3.00 | 2.93 | 2.70 | 2.93 | 2.93 | |
| Yellowness | | | 5.13 | 5.10 | | 5.03 | 5.17 | 5.48 |

It is apparent from Table 2 that mixtures containing white kiln dust to 20 wt % exhibit worse results in uniaxial compression experiments in mortar prisms, wherein said mechanical values are reduced in proportion to the share of white kiln dust. The important fact is that despite expectation water usage is not significantly increased. The degree of mixture whiteness is only subtly decreased by admixing kiln dust.

### Example 3

A comparison test with white cement A with added 15 wt % of white kiln dust or 15 wt % of stonemeal was performed. Physical properties of the mixtures are indicated in Table 3.

**Table 3**

| Cement | Type | A | A | A |
|---|---|---|---|---|
| White kiln dust | wt % | 0 | 0 | 15 |
| Stonemeal | wt % | 0 | 15 | 0 |

| Physical properties | | | | |
|---|---|---|---|---|
| Water demand | wt % | 30.6 | 30.6 | 31.6 |
| Initial settinq | Min. | 109 | 123 | 108 |
| Final settinq | Min. | 127 | 199 | 134 |
| Specific surface | cm2/g | 4531 | 4839 | 4929 |
| R2d | MPa | 36.3 | 30.5 | 34.5 |
| R28d | MPa | 57.8 | | |

It results from indicated physical values for mixtures that addition of 15 wt % of white kiln dust is much more suitable than addition of 15 wt % of stonemeal. After addition of white kiln dust strength developed in two days is much higher than after addition of 15 wt % of neutral stonemeal.

The stated results exhibit that in order to improve the appearance of the wood-cement composite material it is necessary not only to increase fineness (specific surface) of the binding material, but that said additives/additional fine material must possess hydraulic properties, thus it must be a hydraulic active substance, which white kiln dust is and the stonemeal is not.

## Claims

1. Wood-cement composite panel obtainable by mixing wood wool or wood fibers and water cement suspension, by moulding or compacting, by hardening at room temperature or at the increased temperature or eventually by drying and cutting to a suitable size, wherein the water cement suspension contains a cement binder comprising 60 to 95 wt % of cement, 5 to 40 wt % of kiln dust from white cement production with the specific surface area higher than 7500 cm²/g.

2. Wood-cement composite panel according to Claim 1, wherein the cement is white cement or grey cement, either a Portland or a port composite cement.

3. Wood-cement composite panel according to Claim 1 or 2, wherein the cement binder contains 10 to 40 wt % of kiln dust.

4. Wood-cement composite panel according to Claim 1 or 2, wherein the cement binder contains 15 to 35 wt % of kiln dust.

## Patentansprüche

1. Holz-Zement-Verbundplatte, erhältlich durch Mischen von Holzwolle oder Holzfasern und Wasserzementsuspension, durch Formen oder Verdichten, durch Härten bei Raumtemperatur oder bei erhöhter Temperatur oder gegebenenfalls durch Trocknen und Schneiden auf eine geeignete Größe, wobei die Wasserzementsuspension ein aus 60 bis 95 Gew.-% Zement bestehendes Zementbindemittel und 5 bis 40 Gew.-% Ofenstaub aus der Weißzementherstellung mit einer spezifischen Oberfläche von mehr als 7500 cm²/g enthält.

2. Holz-Zement-Verbundplatte nach Anspruch 1, wobei der Zement Weißzement oder Grauzement, entweder ein Portland- oder ein Port-Verbundzement, ist.

3. Holz-Zement-Verbundplatte nach Anspruch 1 oder 2, wobei das Zementbindemittel 10 bis 40 Gew.-% Ofenstaub enthält.

4. Holz-Zement-Verbundplatte nach Anspruch 1 oder 2, wobei der Zementbinder 15 bis 35 Gew.-% Ofenstaub enthält.

## Revendications

1. Panneau composite de bois-ciment en mélangeant la laine de bois ou fibres de bois et une suspension eau-ciment, par moulage ou compression, à travers durcissement à température ambiante ou à température augmentée, ou encore en séchant et coupant en format convenable, où la suspension eau-ciment contient un liant de ciment contenant de 60 à 95 wt % de ciment, de 5 à 40 wt % de poussière de four résultant de la production de ciment blanc avec grande surface spécifique au dessus de 7500 cm²/g.

2. Panneau composite de bois-ciment selon la Demande 1, où le ciment est du ciment blanc ou gris, soit Portland soit ciment composite PCC.

3. Panneau composite de bois-ciment selon la Demande 1 ou 2, où le liant de ciment contient de 10 à 40 wt % de poussière de four.

4. Panneau composite de bois-ciment selon la Demande 1 ou 2, où le liant de ciment contient de 15 à 35 wt % de poussière de four
